# EUROPÄISCHE PATENTANMELDUNG

(11) **EP 0 529 507 A1**
(43) Veröffentlichungstag der Anmeldung: **03.03.1993**
(21) Anmeldenummer: 92114176.8
(22) Anmeldetag: 20.08.1992
(51) Int. Cl.: B64F 1/22

(54) **Schleppfahrzeug zum Bewegen von Flugzeugen**

(30) Priorität: 22.08.1991 DE 4127828
(71) Anmelder: Haug, Friedrich W., P-2710 Sintra (Lisbon) (PT)
(72) Erfinder: Haug, Friedrich W., P-2710 Sintra (Lisbon) (PT)
(74) Vertreter: Otte, Peter, Dipl.-Ing.

(57) **Zusammenfassung**

Bei einem Schleppfahrzeug zum Bewegen von Flugzeugen, auch über größere Entfernungen, welches mit einer Aussparung (16) im hinteren Teil ein lenkbares Fahrwerkteil (10b), insbesondere Bugfahrwerk (17) des Flugzeugs erfaßt, einspannt und zum Transport anhebt, wird vorgeschlagen, die einen im wesentlichen geschlossenen Umriß bildende Aussparung durch eine zur Seite gerichtete Bewegung von sie bildenden hinteren Schleppfahrzeugteilen zur Aufnahme des Bugfahrwerks (Bugrad) zu öffnen, wobei die die Aussparung bildenden hinteren Schleppfahrzeugteile eine Klemmechanik für das von der Aussparung aufgenommene Bugfahrwerk lagern.

## Beschreibung

### Stand der Technik

Die Erfindung geht aus von einem Schleppfahrzeug zum Bewegen von Flugzeugen nach dem Oberbegriff des Anspruchs 1.

Schleppfahrzeuge für das Bewegen von Flugzeugen auf Vorfeld oder im Bereich von Abfertigungsstationen, aber auch zum schnelleren Schleppen über größere Entfernungen sind in vielfachen Ausführungsformen bekannt, wobei das früher umfassend angewendete Schleppen von Flugzeugen mit einer wie eine Deichsel wirkenden Stange zwischen Bugrad und Schleppfahrzeug in der Zwischenzeit umfassend durch das sogenannte stangenlose Schleppen abgelöst wird, bei welchem ein Fahrwerkteil des zu schleppenden Flugzeugs, üblicherweise das lenkbare Bugfahrwerk, also das Bugrad, von dem Schleppfahrzeug in irgendeiner geeigneten Weise aufgenommen und festgespannt wird, so daß für diesen Schleppvorgang das Schleppfahrzeug als Teil des zu schleppenden Flugzeugs angesehen werden kann, wobei dessen Bugrad den Boden nicht mehr berührt.

Die bekannten, das Bugrad aufnehmenden Schleppfahrzeuge können grob unterteilt in zwei Kategorien eingeteilt werden, nämlich solche, die das Bugfahrwerk auf eine Hubschaufel aufnehmen, die unter Umständen auch noch hinter der Hinterachse des Schleppfahrzeugs angeordnet sein kann und solche, bei denen, das Bugfahrwerk in eine U-förmige Aussparung des Schleppfahrzeugs einläuft und dort in geeigneter Weise erfaßt wird, gegebenenfalls ebenfalls mit Hilfe von Hubschaufeln.

Bei allen diesen Ausführungsformen von Schleppfahrzeugen ist zur Aufnahme des Bugfahrwerks des Flugzeugs eine Relativbewegung von Schlepper bzw. Flugzeug unter Last zueinander erforderlich, wobei einer der Teile auch gebremst und der andere angetrieben sein kann, so daß eine zusätzliche Belastung des Bugfahrwerks nicht ausgeschlossen ist.

So wird bei einem bekannten Schlepper dieser Art (DE-OS 36 16 807) das Bugfahrwerk des Flugzeugs auf eine Hubschaufel gezogen bzw. geschoben, wobei sich das Flugzeug mit gelüfteten Bremsen bewegt, während der Schlepper im gebremsten Zustand gehalten wird.

Bei einem anderen Schleppfahrzeug (DE-OS 38 01 855) wird eine in einer hinteren U-förmigen Aussparung des Schleppfahrzeugs angeordnete Hubschaufel abgesenkt, auf deren Unterstützungsfläche dann das Bugfahrwerk mit Hilfe von Greif- und Einzugsvorrichtungen hinaufgezogen wird. Auch hier bewegt sich das Flugzeug während des Ankoppelns an das Schleppfahrzeug, unter Umständen auch in Richtungen, die unerwünschte Kräfte auf dessen Bugfahrwerk zur Einwirkung bringen können.

Das Schleppfahrzeug der zuletzt genannten Art (DE-OS 38 01 855) verfügt über eine Hubschaufel, die nicht nur absenk- und abhebbar, sondern zusätzlich noch um einen Pendelpunkt verschwenk- und kippbar ist. Zur Halterung der Hubschaufel dienen dabei Längs-, Quer- und Parallelogrammlenker sowie Kolben-Zylinder-Einheiten, so daß eine Vielzahl von Bewegungen bei allerdings vergleichsweise kompliziertem Aufbau möglich sind.

Es ist auch schon bekannt (US-PS 4 375 244), das Bugfahrwerk bei Stillstand sowohl des Schleppfahrzeugs als auch des Flugzeuges aufzunehmen, so daß durch Relativbewegungen verursachte unerwünschte Krafteinwirkungen nicht auftreten, wobei in einer Weiterbildung dieses bekannten Schleppfahrzeugs entsprechend DE-PS 38 37 151 die in einer U-förmigen Aussparung des Schleppfahrzeugs angeordnete Halte- und Hubvorrichtung für die Umklammerung des Bugrades über vier Greifarme verfügt, die an Schiebern befestigt sind, die ihrerseits zur horizontalen Anpassung an den jeweiligen Bugraddurchmesser auf horizontal verlaufenden oberen und unteren Gleitführungen verschiebbar angeordnet sind. Dabei ist der gesamte bewegliche Teil der Halte- und Hubvorrichtung in einem Drehkranz um eine zur Längsachse des Schleppfahrzeugs parallele Achse begrenzt schwenkbar gelagert, und die Anstellbewegungen für die Greifarme sind entsprechend dem Bugraddurchmesser des jeweiligen Fahrzeugtyps derart einstellbar, daß bei senkrecht durch die Achse der nicht lenkbaren Hinterräder des Schleppfahrzeugs verlaufender Schwenkachse des Bugfahrwerks die Achse des Drehkranzes durch die Achse jedes der Bugräder verläuft. Hierdurch soll ein verspannungsfreies, schonendes und sicheres Abschleppen einer Vielzahl verschiedener Flugzeugtypen möglich sein. Allerdings müssen zu diesem Zweck hintere Greifarme der Halte- und Hubvorrichtung bei der relativen Annäherung von Schleppfahrzeug und Flugzeug, also beim Einfahren des Bugrades in die U-förmige Ausnehmung zunächst eingeklappt werden, so daß die Aussparung nach hinten zur Aufnahme des Bugrades völlig offen ist. Anschließend erfolgt dann das Einschwenken der Greifarme, so daß diese über ein zusätzliches Gelenk verfügen müssen.

Diese Liste der bekannten Schleppfahrzeuge läßt sich noch ergänzen durch das auch in der Praxis eingesetzte Schleppfahrzeug entsprechend Prospekt KraussMaffei 2.5 B, 4. Ausgabe 10/88 PTS-Plane Transport System, bei dem hinter das in die offene U-förmige Aussparung am Schleppfahrzeug eingefahrene Bugrad Schaufeln räumlich einschwenken und das Bugrad tragen - sowie durch das Goldhofer-Schleppfahrzeug entsprechend Prospekt 2-022-10/88 Goldhofer AST Towbarless Aircraft Movement, bei dem im U-förmigen Ausschnitt im hinteren Schleppfahrzeugteil sitzende Schaufeln abgesenkt werden, das einfahrende Bugrad aufnehmen und verklemmen sowie anheben; die Schaufellagerung verfügt dabei auch über einen Drehpunkt. Schließlich verfügt ein MAN GHH-Schleppfahrzeug über eine starre Schaufel zwischen den Hinterrädern innerhalb des U-förmigen Ausschnitts, wobei das Anheben und Absenken durch die Hinterachsgeometrie des Schleppfahrzeugs erfolgt (Prospekt MAN GHH Aircraft Mover AM 150).

Der Erfindung liegt die Aufgabe zugrunde, ein solches Schleppfahrzeug so auszubilden, daß für die Aufnahme des Bugfahrwerks oder jedenfalls des ein Schleppen eines Flugzeugs ermöglichenden Fahrwerks keine Relativbewegungen erforderlich sind, bei einfachem und sicherem Aufbau des Schleppfahrzeugs sowie der an dem Klemm- und Anhebevorgang des Bugfahrwerks beteiligten Komponenten.

### Vorteile der Erfindung

Die Erfindung löst diese Aufgabe mit den kennzeichnenden Merkmalen des Hauptanspruchs und hat den Vorteil, daß das Schleppfahrzeug soweit an das Bugfahrwerk des Flugzeugs heranfahren kann, bis die endgültige relative Aufnahmeposition erreicht ist, ohne daß das Bugrad überhaupt mit irgendwelchen Hebe- oder Gleitelementen des Schleppfahrzeugs in Berührung kommt, also auch keinerlei gegenseitige Kräfte bei diesem Vorgang ausgeübt werden, wobei auch die sich daran anschließende Aufnahme einschließlich Festklemmen des Bugrads ohne zusätzliche Belastung erfolgen kann. Es müssen daher bei der vorliegenden Erfindung auch keine üblicherweise bei der sonst notwendigen Unterfahrung des Bugfahrwerks auftretende Längskrafteinwirkungen aufgefangen werden.

Ein weiterer Vorteil besteht in dem großen Spielraum bezüglich der aufzunehmenden Radgrößen, also in der problemlosen Anpassungsfähigkeit des Schleppfahrzeugs ohne die Notwendigkeit, an diesem Umstellungen vornehmen zu müssen.

Durch die in den Unteransprüchen aufgeführten Maßnahmen sind vorteilhafte Weiterbildungen und Verbesserungen des im Anspruch 1 angegebenen Schleppfahrzeugs möglich. Besonders vorteilhaft ist die Ausbildung des Schleppfahrzeugs durch Unterteilung in einen Aufnahmeteil für das Bugrad und in einen vorderen Lenkbereich, wobei insbesondere zwei- oder mehrachsige Knicklenker-Fahrgestellte in Frage kommen, bei Ausführung des Gelenks als Knick- oder Drehknickgelenk.

Das Aufnahmeteil für das Bugrad, wie es im folgenden lediglich noch genannt werden soll und in diesem Sinne stellvertretend für jede Art von aufgenommenem Fahrwerkteil bzw. Bugfahrwerk des Flugzeugs steht, umfaßt mindestens zwei Teile, die von einem geschlossenen Zustand in einen geöffneten Zustand und aus diesem (nach Aufnahme des Bugrads) wieder in den geschlossenen Zustand überführt werden können. Hier liegt auch der große Vorteil der Erfindung, denn durch die seitliche öffnungsmöglichkeit, die der hintere Teil des Schleppfahrzeugs zur Aufnahme des Bugrads in eine vorzugsweise mittige Aussparung bietet, werden das Bugrad durch Einschwenken oder Einklappen hintergreifende Lage-,Klemm- und Hebeelemente überflüssig, was zu einer drastischen Vereinfachung gerade in diesem wesentlichen Bereich des Schleppfahrzeugs führt. Dies ist auch der Grund, warum durch die besondere Anordnung der jeweiligen Elemente und Komponenten auf das Fahrwerk des Flugzeugs keine zusätzlichen Kräfte zur Einwirkung kommen, außer den für das Schleppen notwendigen Beschleunigungs-, Verzögerungs- und Lenkkräften.

Mit dem Bugrad unmittelbar in Wirkverbindung gelangende Arretier-, Klemm- oder Greifarme können daher besonders einfach aufgebaut sein, da sie lediglich in Längsrichtung ausfahrbar ausgebildet sein müssen und daher auch keiner komplizierten Klapp- und Schwenkmechanismen bedürfen.

### Zeichnung

Ausführungsbeispiele der Erfindung sind in der Zeichnung dargestellt und werden in der nachfolgenden Beschreibung näher erläutert. Es zeigen:
- Fig. 1: schematisiert eine Seitenansicht des Schleppfahrzeugs in der bevorzugten Ausführungsform eines dreiachsigen Knicklenker-Fahrgestells mit strichpunktiert angedeutetem Flugzeug und aufgenommenem Bugrad und
- Fig. 2: schematisiert eine Draufsicht auf das Schleppfahrzeug in der gleichen dreiachsigen Knicklenker-Fahrgestellausführung, bei fehlendem Flugzeug, jedoch in der Aufnahmeaussparung strichpunktiert angedeutetem Bugrad;
- Fig. 3: in größerem Detail die Greifarm-Ausbildung in ihrer Gelenk- und Führungsanordnung des das Bugrad aufnehmenden Aufnahmeteils in Seitenansicht und
- Fig. 4: in Draufsicht, mit besonders gut erkennbarer Darstellung der einfachen Ausbildung der Greifarmsysteme, während
- die Figuren 5, 6, 7 und 8: mögliche Ausführungsformen der Grundfunktion der seitlichen Öffnungsbewegung des Aufnahmeteils zeigen.

### Beschreibung der Ausführungsbeispiele

Der Grundgedanke vorliegender Erfindung besteht darin, das Aufnahmeteil für das Bugrad des zu schleppenden Flugzeugs seitlich öffnungsfähig auszubilden, so daß beim Schließen des Aufnahmeteils nach gegenseitiger krafteinwirkungsfreier Annäherung das Bugrad automatisch hintergriffen ist und dann in an sich beliebiger Weise von Halte-, Klemm- und/oder Hebemechanismen in Längsrichtung von vorn und hinten gesehen erfaßt und dann noch angehoben werden kann. Hierdurch ist eine absolut sichere Fixierung des Bugrads für den Schleppvorgang bei einfachster Ausbildung des Schleppfahrzeugs in diesem gegenseitigen Aufnahme- und Einwirkungsbereich erzielt.

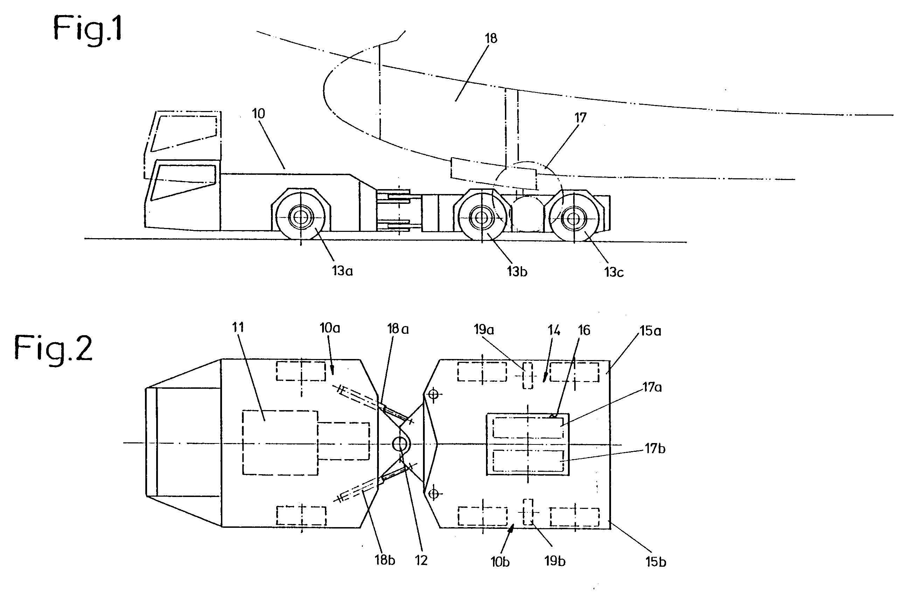

Das in Fig. 1 dargestellte Schleppfahrzeug 10 ist als dreiachsiges Knicklenker-Fahrgestell ausgebildet, wobei ein vorderes Fahrzeugteil 10a, welches auch den Antrieb 11 beherbergen kann, über ein Knick- oder auch Drehknickgelenk 12 mit dem hinteren Fahrzeugteil 10b verbunden ist, mit einer ersten Achse 13a im vorderen Fahrzeugteil und zwei Achsen 13b, 13c im hinteren Fahrzeugteil 10b.

Es versteht sich, daß der Grundaufbau des Schleppfahrzeugs an sich grundsätzlich beliebig ist und auch als zweiachsiges oder allgemein mehrachsiges Fahrgestell ausgebildet sein kann - schließlich kann auf die Knick- bzw. Drehknickgelenkausbildung zwischen dem vorderen und dem hinteren Fahrzeugteil auch verzichtet werden.

Der hintere Fahrzeugteil 10a bildet jedenfalls den Aufnahmemechanismus 14 für das Bugrad und besteht aus mindestens zwei Teilen 15a, 15b, die eine vorzugsweise mittige Aussparung 16 einschließen, die in dem in Fig. 2 gezeigten geschlossenen Zustand der Teile 15a, 15b eine insoweit dann auch geschlossene Umrißform aufweist.

Die Aussparung 16 dient der Aufnahme und Fesselung, also dem Einklemmen des Bugrads 17 des bei 18 nur ganz schematisch angedeuteten Flugzeugs (Fig. 1), wobei das Bugrad im folgenden als Doppelbugrad ausgebildet ist und aus zwei Einzelrädern 17a, 17b besteht. Es versteht sich, daß die im folgenden hauptsächlich noch verwendete Bezeichnung eines Bugrades hier allgemein für ein vom Schleppfahrzeug aufnehmbares (lenkbares) Fahrwerk des Flugzeugs, in der Regel also für das Bugfahrwerk steht.

Das Aufnahmeteil 14 des Schleppfahrzeugs ist so ausgebildet, daß es das Bugrad aufnehmen, einspannen und anheben kann.

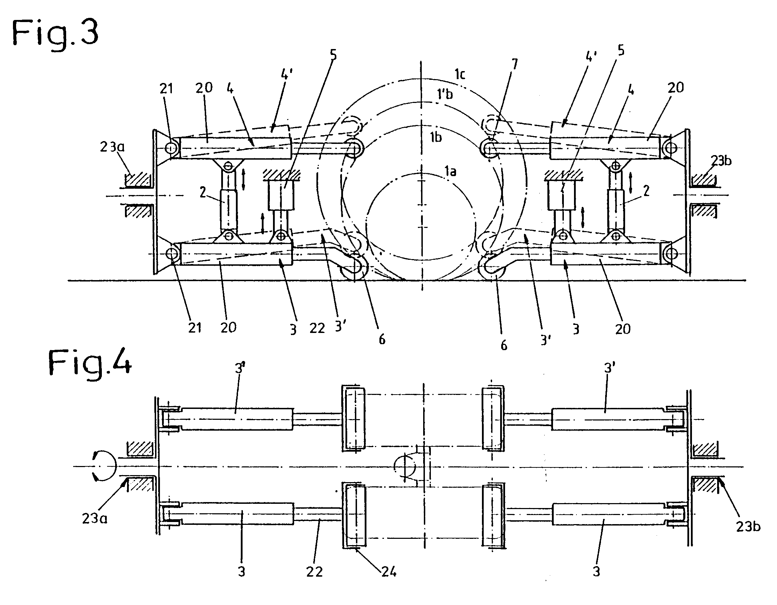

Bevor auf die spezielle Ausbildung des Aufnahmeteils anhand der Darstellung der Figuren 3 bis 8 im folgenden genauer eingegangen wird, sei noch darauf hingewiesen, daß der Antrieb des Schleppfahrzeugs 10 mechanisch, hydraulisch oder elektrisch erfolgen kann, dabei auf eine oder mehrere Achsen wirkend; bevorzugt ist ein hydrostatischer Antrieb auf die beiden hinteren Achsen 13b, 13c vorgesehen, wobei aber auch ein Allradantrieb in Betracht kommt.

Die Lenkung des Fahrzeugs erfolgt entweder durch Radeinschlag an einem oder mehreren der Achsen oder über das Knickgelenk, wozu in der Draufsicht der Fig. 2 beidseitig Lenkzylinder 18a, 18b angedeutet sind, durch deren jeweilige Beaufschlagung ein besonders einfaches und wirksames Kurvenfahren möglich ist.

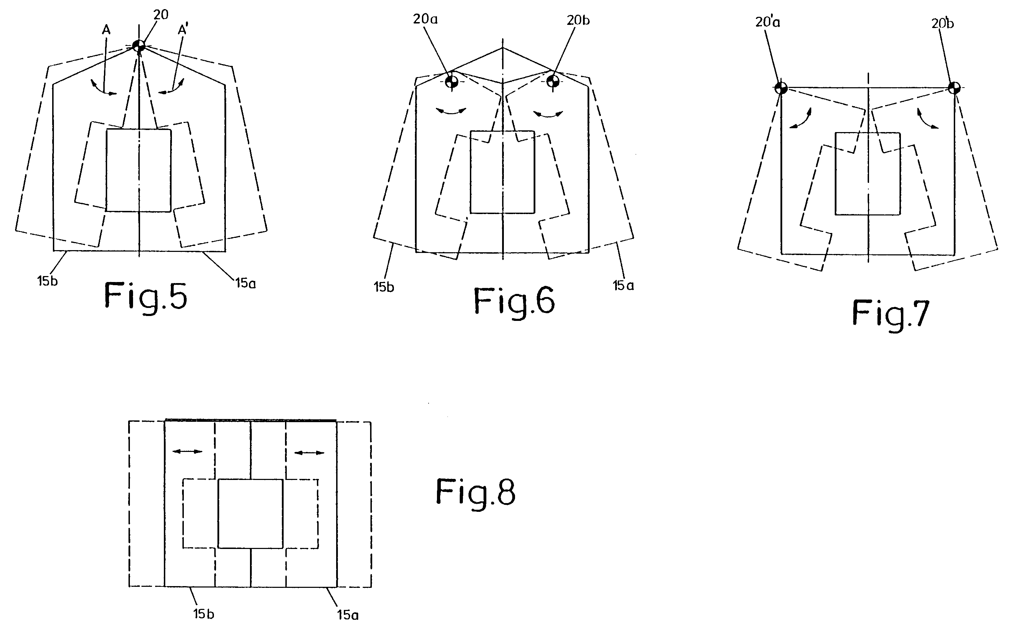

Der Aufnahmemechanismus 14 ist so ausgebildet, daß sich seine beiden Teile 15a, 15b, aus denen er besteht, seitlich öffnen können, und zwar in Querrichtung zur allgemeinen Bewegungsrichtung des Schleppfahrzeugs, wozu sinnvollerweise zwei in Fig. 2 lediglich angedeutete, in dieser Richtung rotationsfähige Hilfs-Rollen oder -Räder 19a, 19b noch vorgesehen sind, die zu den Achsen bzw. Rädern des hinteren Fahrzeugteils 10b eine relative Höhenverstellung durchführen können, so daß sich die beiden Teile 15a, 15b des Aufnahmemechanismus so öffnen können, wie dies alternativ in den Figuren 5, 6, 7 und 8 gezeigt ist. Entsprechend der Darstellung der Fig. 5 klappen die beiden Teile über ein zentrales Gelenk 20 mit vertikaler Achse entsprechend den durch die Doppelpfeile A, A' angedeuteten Bewegungsrichtungen nach außen auf und schließen sich auch wieder, wobei eine solche Öffnungsbewegung auch dadurch möglich ist, daß jedes der Teile über ein eigenes Gelenk 20a, 20b mit vertikaler Achse verfügt, und die Position der Gelenke zwischen der Fahrzeuglenkachse und der seitlichen Fahrzeugbegrenzung angeordnet sein kann, wie dies für den letzteren Fall in Fig. 7 bei 20a', 20b' dargestellt ist. Bei diesen Ausführungsformen öffnen sich die beiden Teile 15a, 15b spitzwinklig zueinander, haben also nach hinten die größte Öffnungsweite, so daß aus dieser Richtung das Bugrad auch problemlos durch eine nach seitlicher Öffnung der Teile und Rückwärtsrangieren des Schleppfahrzeugs ermöglichende Annäherungsbewegung aufgenommen werden kann.

In allen Darstellungen der Figuren 5, 6, 7 und 8 ist die seitlich aufgeklappte oder geöffnete Position durch eine gestrichelte Linienführung kenntlich gemacht, wobei es schließlich auch möglich ist, daß die beiden Teile 15a, 15b, die grundsätzlich immer die gleiche Form aufweisen können und daher auch die gleichen Bezugszeichen tragen, durch seitliche Parallelverschiebung auf einer oder mehreren Führungen senkrecht zur Fahrzeuglängsachse geöffnet werden können, wie dies Fig. 8 zeigt.

Das Öffnen und Schließen der beiden Teile des Aufnahmemechanismus kann durch mechanische, hydraulische oder elektrische Bauteile erfolgen, wobei nach dem Schließen eine kraft- oder formschlüssige Verriegelung durch für sich gesehen bekannte Mittel noch vorgenommen werden kann.

Die beiden Teile 15a, 15b des Aufnahmemechanismus tragen bzw. lagern dann ihrerseits eine geeignete Klemmechanik, z.B. so wie die in den Figuren 3 und 4 dargestellte Mechanik, die dem Erfassen, Hintergreifen, Sichern, Festklemmen und gegebenenfalls auch dem Anheben des in Fig. 3 in mehreren verschiedenen Größen 1a, 1b, 1c gezeigten Bugrades dient.

Diese Mechanik kann von an sich beliebiger Ausführungsform sein und besteht bei dem dargestellten Ausführungsbeispiel bevorzugt aus Rollen, Keilen, Platten, allgemein Halte- und Sicherungselementen, die mit dem in Fig. 3 in verschiedenen Größen 1a, 1b, 1c dargestellten Bugrad in Wirkverbindung treten und die, wie die Figuren 3 und 4 zeigen, bevorzugt an vertikal schwenkbaren Greifarmen in Längsrichtung, also in Richtung auf das Bugrad verschiebbar gelagert sind.

Im einzelnen umfaßt die Arretier- und Haltemechanik für das Bugrad untere beidseitige Führungen 3, 3' sowie obere, ebenfalls beidseitige, also das Bugrad von vorn und hinten in Laufrichtung umfassende Führungen 4, 4'. Diese Führungen 3, 3' sowie 4, 4' sind insgesamt als Greifarme ausgebildet, wobei bevorzugt sich in Längsrichtung erstreckende hydraulische Arbeitszylinder 20 eingesetzt werden, die je über ein Gelenk 21 nach oben und unten in der Zeichnung der Fig. 3 verschwenkbar gelagert sind und deren nach innen, also in Richtung auf das Bugrad weisende, entsprechend ausfahrbare Kolbenstangen 22 in ihrem vorderen Bereich Fixierelemente in Form von Rollen, Keilen, Platten u. dgl. tragen, die sich beim Ausfahren an das Bugrad anlegen.

In der Darstellung der Figuren 3 und 4 sind bevorzugt Rollen dargestellt, was mit Bezug auf die Erfindung nicht als einschränkend zu verstehen ist.

Die unteren Führungen 3, 3' sind über Hebeeinrichtungen 5, bevorzugt ebenfalls in Form von einseitig stationär gelagerten hydraulischen Arbeitszylindern, so ausgebildet, daß sie sich nach oben und unten bewegen können, wie die gestrichelten Darstellungen in Fig. 3 auch andeuten, so daß entweder auf diese Weise ein Anheben des aufgenommenen Bugfahrzeugs in Frage kommt oder, alternativ, die Klemmechanik arretiert und fixiert das solchermaßen eingeschlossene Bugrad lediglich und das Anheben erfolgt anschließend durch ein entsprechendes Verfahren in Vertikalrichtung durch das Fahrwerk des Schleppfahrzeugs, also Anheben bzw. Einziehen der Achsen. In diesem Fall kann die an den unteren hydraulischen Arbeitszylindern 20 gelenkig festgemachte Hebeeinrichtung 5 auch entfallen.

Die oberen Führungen 4, 4' sind über Verstellmechanismen 2 sinnvollerweise mit den unteren Führungen 3, 3' verbunden, in der dargestellten Ausführungsform vorzugsweise über an beiden gelenkig gelagerte hydraulische Arbeitszylinder, so daß es möglich ist, die oberen Führungen, die dem Festklemmen der durch die unteren Führungen untergriffenen Bugräder dienen, auf den jeweiligen Raddurchmesser entsprechend einzustellen. Hier können geeignete Sensoren oder eine Eingabe durch Steuerung vorgesehen sein.

Man erkennt, daß eine solche Klemmechanik in der Lage ist, sich auf beliebige Bugraddurchmesser problemlos einzustellen, ohne daß es größerer Änderungen bedarf, lediglich durch die entsprechende Beaufschlagung der an dem Klemm- und Fixier- sowie Hebemechanismus beteiligten hydraulischen Arbeitszylinder.

Schließlich sollte noch darauf hingewiesen werden, daß bei solchen Flugzeugen, die über eine geneigte Fahrwerkstrebe verfügen (bei senkrechter Fahrwerkstrebe eines Flugzeugs treten beim Befahren von Kurven keine Änderungen ein), ein Neigungsausgleich durch eine geeignete Schwenklagerung der Klemmechanik bzw. ihrer Aufnahmeorgane sichergestellt sein kann, um eventuell auftretende zusätzliche Belastungen des Fahrwerks zu vermeiden. Eine solche Schwenklagerung ist in Fig. 4 durch eine beidseitige rotatorische, also Drehausgleichsbewegungen ermöglichende Lagerung 23a, 23b möglich, die beispielsweise als Zapfenlagerung ausgebildet sein kann. Aus Fig. 4 sind auch die an den Enden der Kolbenstangen 22 vorgesehenen Lageraufnehmungen 24 für die hier vorgesehenen Rollen erkennbar.

Der Neigungsausgleich läßt sich aber auch durch eine entsprechende Ausbildung der Hebeeinrichtungen 5 realisieren, die dann beim Kurvenfahren unterschiedlich für die beiden Teilräder des hier gezeigten Doppelbugrades in ihrer relativen Höhenpositionsbestimmung ansprechen.

Die Aufnahme des Bugfahrwerks, welches in der Zeichnung grundsätzlich in Form eines Doppelrades dargestellt ist, erfolgt dann so, daß zunächst entsprechend den Figuren 5 bis 8 der Aufnahmemechanismus seitlich geöffnet wird durch Aufklappen oder seitliches Wegfahren der beiden Teile 15a, 15b und anschließendes Heranfahren an das Bugrad, bis dieses in der Mitte der Aussparung 16 steht.

Dabei sind nach dem Aufklappen alle verstellbaren Teile der Klemmechanik auf den größtmöglichen Aufnahmedurchmesser zurückgezogen, d. h. die Fixierelemente 6 an den Kolbenstangenenden der hier vorgesehenen hydraulischen Arbeitszylinder sind vollständig eingezogen, so daß es nach Aufnahme des Bugrades möglich ist, die beiden Teile 15a, 15b wieder (über die Gleitrollen oder Hilfsräder 19a, 19b) zu schließen und miteinander in beliebiger Weise zu verriegeln.

Anschließend wird das Bugfahrwerk durch die Rollen oder Keile an den Enden der unteren Führungen 3, 3' unterfahren und dadurch in Längsrichtung fixiert, so, wie dies in Fig. 3 dargestellt ist.

Oberhalb der Bugradachse fahren dann in Fahrzeuglängsrichtung die oberen Halteelemente in Form von Rollen oder Platten ebenfalls in Fahrzeuglängsrichtung, die zur Anpassung an den Raddurchmesser verstellbar sein können, an das Bugrad heran und fixieren dieses zur Kraftübertragung und gegen ein Herausspringen. Hier erfolgt auch ein Einsatz der entsprechenden Verstellzylinder 2 durch deren Ansteuerung entweder durch den Raddurchmesser in geeigneter Weise erfassende Sensoren oder durch Eingabe in eine übergreifende Steuerung, wobei in diesem Zusammenhang auch gleich darauf hingewiesen werden kann, daß praktisch alle insoweit geschilderten Arbeitsvorgänge auch automatisch innerhalb kürzester Zeit ablaufen können, so daß anschließend, also nach dem Umfassen des Bugrades entweder das Fahrwerk angehoben wird durch Ausfahren der an den Achsen 13b, 13c angeordneten Räder des hinteren Fahrzeugteils oder durch Anheben der unteren Führungsrollen oder Keile mit Hilfe der Hebeeinrichtungen 5 in Form hydraulischer Arbeitszylinder. Damit ist das Flugzeug schleppbereit, wobei das Absenken und die Freigabe des Bugfahrwerks dann in umgekehrter Reihenfolge erfolgt.

Vorzugsweise laufen alle oder die wesentlichen Arbeitsvorgänge computergesteuert automatisch ab, auch das Einstellen auf unterschiedliche Raddurchmesser, wozu in entsprechender Weise eine zentrale Steuereinheit noch vorgesehen sein kann, die die jeweiligen, vorgesehenen Arbeitszylinder mit Druckmittel versorgt bzw. ansteuert.

Es versteht sich, daß auf diese Weise auch Bugfahrwerke mit nur einem Bugrad erfaßt werden können, wozu dann die andere Hälfte stillgelegt werden kann, wie überhaupt die spezielle Ausführungsform der Klemmechanik erheblichen Variationen zuführbar ist, beispielsweise sind hier auch beidseitig ausfahrbare Schaufeln denkbar, die mit keilförmigen Vorderbereichen das Bugrad untergreifen und gegebenenfalls gleichzeitig von oben deckelartig Fixierelemente, etwa in Form von Klemmplatten o. dgl. auf das Bugrad absenken, so daß dieses sich problemlos fassen und arretieren läßt; anschließend können die beidseitigen Schaufeln angehoben werden oder die Fahrzeugräder werden ausgefahren.

Es versteht sich, daß innerhalb des erfindungsgemäßen Rahmens eine Vielzahl von Modifikationen und Änderungen möglich sind; so ist es möglich, Aufnahmeteil und Motorteil auch als separate Elemente zu nutzen, die über eine geeignete Kupplung, auch wie bei den bisherigen Ausführungsbeispielen gezeigt, mit Lenkungsmechanismen ergänzt, verbunden sind.

Der Grund hierfür liegt darin, daß nicht auszuschliessen ist, daß Flugzeuge nicht nur vom Terminal bis in die Nähe des Startpunkts geschleppt werden, sondern auch die gelandeten Flugzeuge von der Nähe des Landungspunktes zum Terminal. Bei separater Gestaltung von Aufnahmeteil und Motorteil kann dann beispielsweise das ins Terminal oder an einen sonstigen geeigneten Ort geschleppte Flugzeug mit dem Aufnahmeteil während der Abfertigung, was auch für Frachtflugzeuge gilt, also Ent- und Beladung, allgemeiner Versorgung, Aufnahme von Passagieren u.dgl., verbunden bleiben, während das Motorteil kostengünstig andere Flugzeuge, die dann ebenfalls mit einem eigenen Aufnahmeteil verbunden sind, bewegt.

Dies bedeutet, daß man eine wesentlich größere Leistungsfähigkeit mit einem geringeren Bedarf an Motorteilen verbindet, wobei sich ferner der Vorteil ergibt, daß nicht jedesmal bei Einleitung des Schleppvorgangs die vollständige Aufnahmefunktion für das Bugrad durch das Aufnahmeteil ablaufen muß, sondern lediglich noch bei einfachem und auch zeitlich wesentlich schnellerem Ablauf über eine geeignete Kupplung die Verbindung des Aufnahmeteils mit dem Motorteil erfolgen muß.

Eine weitere Ausgestaltung, die sich ebenfalls innerhalb des erfindungsgemäßen Rahmens befindet, besteht darin, daß überhaupt keine Trennung in Aufnahmeteil und Motorteil beim Schleppfahrzeug stattfindet, sondern dieses im Ganzen und insofern einstückig ausgelegt ist und dann für die Aufnahme des Bugrades aber ebenfalls so aufklappen kann, wie dies die Fig. 5, 6, 7 und 8 in alternativen Gestaltungen darstellen, wobei entweder nur ein hinterer Bereich, der mit dem Motorteil einstückig verbunden ist, aufklappt oder das gesamte Fahrzeug seitlich aufklappbar ist oder seitlich geöffnet werden kann.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

## Patentansprüche

1. Schleppfahrzeug zum (langsamen) Bewegen von Flugzeugen auf Vorfeld bzw. im Bereich einer Abfertigungsstation und/oder zum (schnellen) Schleppen über größere Entfernungen, mit einer Aussparung im hinteren Teil des Schleppfahrzeugs zur Aufnahme eines (lenkbaren) Fahrwerkteils, insbesondere Bugfahrwerk (Bugrad) des Flugzeugs, wobei das Bugfahrwerk erfaßt, eingespannt und zum Transport angehoben wird, dadurch gekennzeichnet, daß die einen im wesentlichen geschlossenen Umriß bildende Aussparung (16) durch eine zur Seite gerichtete Bewegung von sie bildenden Schleppfahrzeugteilen (15a, 15b) zur Aufnahme des Bugfahrwerks (Bugrads 17a, 17b) geöffnet wird.

2. Schleppfahrzeug nach Anspruch 1, dadurch gekennzeichnet, daß die die Aussparung (14) bildenden hinteren Schleppfahrzeugteile eine Klemmechanik für das von der Aussparung (16) aufgenommene Bugfahrwerk (17a, 17b) lagern.

3. Schleppfahrzeug nach Anspruch 1 oder 2, dadurch gekennzeichnet, daß die Klemmechanik untere Führungen (3, 3') aufweist, die das Bugfahrwerk von unten umfassen, sowie obere Führungen (4, 4'), die das Bugfahrwerk von oben umfassen und fixieren.

4. Schleppfahrzeug nach Anspruch 3, dadurch gekennzeichnet, daß obere und untere Führungen mit dem Bugrad unmittelbar in Wirkverbindung tretende Fixierelemente (6) wie Rollen, Keile, Platten, Schaufeln aufweisen und daß die oberen Führungen auf den jeweiligen Raddurchmesser des Bugfahrwerks einstellbar sind.

5. Schleppfahrzeug nach Anspruch 3 oder 4, dadurch gekennzeichnet, daß obere und untere Führungen in Vertikalrichtung gelagerte Greifarme in Form von hydraulischen Arbeitszylindern (20) sind, an deren ausfahrbaren Kolbenstangen (22) die das Rad erfassenden Fixierelemente (6) angeordnet sind, und die unteren Führungen Hebeeinrichtungen (5) für das Anheben des aufgenommenen Bugfahrwerks aufweisen.

6. Schleppfahrzeug nach Anspruch 3, 4 oder 5, dadurch gekennzeichnet, daß die oberen Führungen mit den unteren Führungen über einstellbare Verstellelemente (2) miteinander verbunden sind, wobei die Greifarme der oberen und unteren Führungen, die Hebeeinrichtungen und die Spannelemente hydraulische Arbeitszylinder sind.

7. Schleppfahrzeug nach einem der Ansprüche 1 bis 4, dadurch gekennzeichnet, daß zum Anheben des Bugfahrwerks nach dessen Umfang durch die Klemmechanik die Fahrzeugräder mindestens im hinteren Schleppfahrzeugteil (10b) ausfahrbar sind.

8. Schleppfahrzeug nach einem der Ansprüche 1 bis 7, dadurch gekennzeichnet, daß die Klemmechanik für das Umfassen des Bugfahrwerks einen Neigungsausgleich zur Vermeidung zusätzlicher Belastungen des Fahrwerks bei Kurvenfahrten aufweist, der von einer Schwenklagerung (23a, 23b) für die Klemmechanik gebildet ist oder daß zum Neigungsausgleich die Hebeeinrichtungen (5) für die unteren Führungen (3, 3') einstellbar sind.

9. Schleppfahrzeug nach einem der Ansprüche 1 bis 8, dadurch gekennzeichnet, daß das Bugfahrzeug in Form eines Doppelbugrades von seitlich parallel nebeneinander stehenden Klemmechaniken, jeweils mit unseren und oberen Führungen jeweils in Längsrichtung vorn und hinten, umfaßt ist.

10. Schleppfahrzeug nach einem der Ansprüche 1 bis 9, dadurch gekennzeichnet, daß Sensoren für die Erfassung des Raddurchmessers, die jeweiligen Relativpositionen von Schleppfahrzeug und Bugfahrwerk, aus Kurvenfahrt resultierender Neigungsausgleich u.dgl. vorgesehen sind, die auf eine zentrale Steuereinheit arbeiten, die die jeweiligen hydraulischen Arbeitszylinder der Klemmechanik für das Bugrad entsprechend beaufschlagt.

11. Schleppfahrzeug nach einem der Ansprüche 1 bis 10, dadurch gekennzeichnet, daß die beiden relativ zueinander öffnungsfähigen Teile (15a, 15b) von einem hinteren, als Aufnahmeteil (10b) ausgebildeten Fahrzeugteil gebildet sind.

12. Schleppfahrzeug nach einem der Ansprüche 1 bis 11, dadurch gekennzeichnet, daß das gesamte Schleppfahrzeug unter Bildung der Aussparung (16) seitlich öffnungsfähig oder aufklappbar ausgebildet ist.

13. Schleppfahrzeug nach einem der Ansprüche 1 bis 12, dadurch gekennzeichnet, daß das hintere Fahrzeugteil (10b) als Aufnahmeteil mit dem vorderen Fahrzeugteil (10a) als Motorteil über eine lösbare Kupplung miteinander verbunden sind, derart, daß das Aufnahmeteil mit dem Flugzeug verbunden bleiben kann bei anderweitigem Betrieb des Motorteils.

14. Schleppfahrzeug nach einem der Ansprüche 1 bis 13, dadurch gekennzeichnet, daß die beiden relativ zueinander öffnungsfähigen Teile (15a, 15b) unsymmetrisch ausgebildet sind derart, daß eines der Teile eine in Querrichtung U-förmige Umrißöffnung aufweist, in welcher die gesamte Klemmechanik für das Bugrad angeordnet ist, mit entsprechender seitlicher Verfahrbarkeit, während das andere Teil als lediglicher Schließmechanismus für das so gebildete Hauptteil ausgebildet ist.

15. Schleppfahrzeug nach einem der Ansprüche 1 bis 14, dadurch gekennzeichnet, daß die beiden Teile (15a, 15b) des vom hinteren Fahrzeugteil gebildeten Aufnahmeteils über ein gemeinsames zentrales Gelenk (20) mit vertikaler Achse verbunden sind oder jeweils über getrennte Gelenke (20a, 20b, 20a', 20b') verfügen, die zwischen der Fahrzeuglängsachse und der seitlichen Fahrzeugbegrenzung angeordnet sind (Fig. 5, Fig. 6 und Fig. 7).

16. Schleppfahrzeug nach einem der Ansprüche 1 bis 15, dadurch gekennzeichnet, daß die beiden Teile (15a, 15b) nach dem Schließen kraft- oder formschlüssig verriegelbar sind.

17. Schleppfahrzeug nach Anspruch 1, dadurch gekennzeichnet, daß das Fahrgestell ein mehrachsiges Knicklenkerfahrgestell mit Ausbildung des Gelenks als Knick- oder Drehknickgelenk ist und der Antrieb mechanisch, hydraulisch oder elektrisch, vorzugsweise hydrostatisch auf die beiden Achsen (13b, 13c) des hinteren Fahrzeugteils (10b) oder auf alle Achsen des Fahrzeugs erfolgt und beidseitig des die beiden Fahrzeugteile (10a, 10b) verbindenden Knickgelenks (12) hydraulische Lenkzylinder (18a, 18b) angeordnet sind.
